Europäisches Patentamt

European Patent Office

Office européen des brevets

(19)

(11) Publication number: **0 010 241**
**A2**

## (12) EUROPEAN PATENT APPLICATION

(21) Application number: **79103826.8**

(22) Date of filing: **06.10.79**

(51) Int. Cl.³: **G 01 C 3/08**

(30) Priority: **20.10.78 DE 2845850**

(43) Date of publication of application:
**30.04.80 Bulletin 80/9**

(84) Designated Contracting States:
**FR GB IT**

(71) Applicant: **Erwin Sick GmbH Optik-Elektronik**
**Sebastian-Kneipp-Strasse 1**
**D-7808 Waldkirch(DE)**

(72) Inventor: **Erdmann, Jürgen**
**Eisenbahnstrasse 35**
**D-7808 Waldkirch(DE)**

(72) Inventor: **Fetzer, Günter**
**Gewerbestrasse 43**
**D-7803 Gundelfingen(DE)**

(74) Representative: **Patentanwälte Manitz, Finsterwald**
**und Grämkow**
**Robert-Koch-Strasse 1**
**D-8000 München 22(DE)**

(54) **Distance sensing apparatus.**

(57) Distance sensing apparatus for determining the distance to an illuminated surface features an objective, for forming an image of the illuminated surface, and first and second photo-electric converters respectively disposed at first and second image planes respectively corresponding to first and second object planes equivalent to maximum and minimum possible distances of the illuminated surface from the apparatus. The arrangement is such that the light falling on the first and second photo-electric converters depends on the location of the illuminated surface between the maximum and minimum possible distances. Electronic processing circuitry is able to uniquely define this location from the outputs of the two photoelectric converters.

The illuminated surface is preferably illuminated from a light source contained within the distance sensing apparatus and which uses the central portion of the objective lens to form a parallel illuminating beam. A mirror can conveniently be positioned between the first and second image planes to increase the effective distance therebetween, which results in a more compact construction. The processing circuitry conveniently includes either a difference forming stage or a quotient forming stage which respectively enable either a qualitative or quantitative determination of the location of the illuminated surface.

./...

FIG.1

## Distance Sensing Apparatus

The invention relates to a distance sensing apparatus for determining the distance of an illuminated surface from the apparatus and has particular reference to a distance sensing apparatus based on lens and photoelectric converter means.

Distance sensing apparatus of this kind is for example required in automatic monitoring, regulation or control installations. Possible applications are the monitoring of the heights of stacks and filling levels, the monitoring of the presence or absence of an object, the control of the sag of a band or the like, or the detection of the thickness of a material.

Many of these tasks are carried out using mechanical distance sensors or boundary detection probes. The required mechanical contact with the material whose position is to be detected and also the limited speed of operation of these mechanical sensors is often very obstructive and in many cases prohibits the use of such sensors. Distance sensors which operate on inductive or capacitive principles are also already known but are however dependent on the characteristics of the material and are therefore not suitable for use in many situations.

Distance sensors based on optical and electronic principles are also known which are able to recognize the presence of objects within smaller or larger ranges. Sensors of this kind have however the disadvantage that they are strongly dependent on the surface of the material to be sensed and in particular from the reflective capability or characteristics of the surface. An object of good reflectivity will for example be recognized at a greater distance than an object with a lesser degree of reflectivity. Poorly reflecting objects are amongst other things, and in comparison with obstacles of good or better reflectivity, simply not recognized. The range within which monitoring can take place is moreover relatively small.

This also holds true for so-called V-light barriers in which the axes of transmission and reception intersect at a specified angle. These light barriers do have a defined recognition range,the size of which depends on the angle of the two optical axes to one another and their cross-section at right angles to the optical axis, there is however a direct relationship between the size of the recognition range and the tolerance or inaccuracy which depends on the degree of reflectivity of the object.

In contrast to these previous solutions the principal object underlying the present invention is to provide distance sensing apparatus based on optical and electronic principles and which delivers a pronouncement on the position of a surface within a specified sensing range from the distance sensing apparatus substantially independently of the characteristics of the surface.

A further object underlying the present invention is to provide an apparatus of good performance but which is of simple and cost effective construction and which is also very reliable in operation.

For accomplishing these objects there is provided,in accordance with the present invention, distance sensing apparatus for determining the distance of an illuminated surface from the apparatus said apparatus comprising lens means for forming an image of said illuminated surface, first and second photo-electric converters respectively disposed at first and second image planes of said lens means, said first and second image planes respectively corresponding to first and second object planes equivalent to near and remote possible locations of said illuminated surface from the apparatus, whereby the light falling on the first and second photoelectric converters depends on the location of the illuminated surface, and processing means for processing the output signals from said first and second photoelectric converters to produce a single output signal representative of the distance of
said illuminated surface from the apparatus.

Thus in accordance with the invention light,which is
preferably radiated from an internal light source, falls
onto two photoelectric converters following reflection at
the surface of an object located within a predetermined
distance sensing range. It is of decisive significance
that different respective distances are associated with
each of the two photoelectric converters by virtue of the
image forming lens means. In this way it is ensured,
independently of the reflective characteristics of the
surface of an object to be sensed,that the reflected light
flux is distributed between the two photoelectric converters
in dependence     on the position at which the reflection
of light takes place. The invention thus starts from the
recognition of the fact that,when an object is located at
a position in object space which is associated via the
image forming optics with the first photoelectric converter,
then this photoelectric converter will receive a greater
light flux than the other photoelectric converter which
is associated with another position within the scanning
range and vice versa.

By suitably combining or processing the electrical signals
from the two photoelectric converters it is possible to
achieve,in very simple manner and substantially independently
of the material,a pronouncement over the spatial relationship
between the surface and the distance sensing apparatus. Of
course the distance sensing apparatus operates as a primary
reference datum and it will be readily appreciated that the
position of the surface can readily be referred to any other
desired datum.

In accordance with a first advantageous embodiment the processing circuitry comprises a difference forming stage which forms a difference signal representative of the difference of the output signals from the first and second photoelectric converters and a display device connected to the difference forming stage for displaying this difference signal.

This embodiment is particularly suitable for use in situations in which it is important that a specified desired distance from the distance sensing apparatus should be maintained. This desired distance preferably corresponds with the difference signal zero. In such cases it is thus sufficient for the display device solely to indicate whether the difference is zero,or smaller,or greater than zero. This enables the electronic circuitry to be of particularly simple construction.

In accordance with a further embodiment the processing circuitry contains a quotient forming stage for forming a quotient signal representative of the quotient of the signals from the first and second photoelectric converters and which is connected to a display device for displaying the quotient signal. The quotient display device is particularly suited to an arrangement in which it is directly calibrated in distances, for example centimeters, from a reference plane. The distance is indeed not linearly proportional to the quotient signal however a unique and reproducable relationship does exist and this is sufficient.

In order,when sensing the smallest possible distance,to achieve a good separation of the radiation which falls on the photoelectric converter which is furthest away from the lens means from the other photoelectric converter a preferred embodiment features a central aperture stop which results in only a marginal region of the lens means or objective being used for image formation. The aperture

stop is preferably located on the image side of the lens means or objective. In particular the aperture stop should have a distance from the objective such that each of the photoelectric converters receives substantially the same quantity of light from its associated object plane when the same object with the same illumination is arranged at the associated object planes.

In particular it is possible in this case for the image plane associated with the one of the first and second photoelectric converters which is located nearer the objective to be displaced towards the objective by means of a mirror, in particular a plane mirror, which is sized and positioned so that it does not hinder light from the illuminated surface reaching the second image plane associated with the other of said first and second photoelectric converters when the object is located at the corresponding image plane. This arrangement allows a particularly space saving and compact construction.

The central region of the lens means or objective which is covered by the central aperture stop can be also be sensibly utilized if a central opening is provided in the central aperture stop and a light source is arranged behind the central opening so as to generate an illuminating beam for illuminating the surface via the objective. In particular it is also possible to locate a further lens in the central opening, or also in front of or behind the central opening, which cooperates with the objective in order to form the light leaving the light source into a parallel light beam for illuminating the surface the distance to which is to be determined.

A specific embodiment of the invention will now be described
in the following by way of example only and with reference
to the accompanying drawings in which are shown:

Fig. 1    a schematic partially sectioned side view of distance
          sensing apparatus in accordance with the invention
          and showing the surface of an object located at one
          end of the range of distances which can be sensed,

Fig. 2    a view corresponding to Fig. 1 but in which the
          surface of the object is located at the other end
          of the range of distances which can be sensed,

Fig. 3    a first advantageous embodiment of an electronic
          processing circuit for use with the distance sensing
          apparatus of Figs. 1 and 2,

Fig. 4    a second advantageous embodiment of an electronic
          processing circuit for use with the distance sensing
          apparatus of Figs. 1 and 2, and

Fig. 5    a diagram showing the dependence of the light flux
          reaching the two converters of the distance scanning
          apparatus of Figs. 1 and 2 on the location of the
          surface of the object    within the range which can
          be sensed.

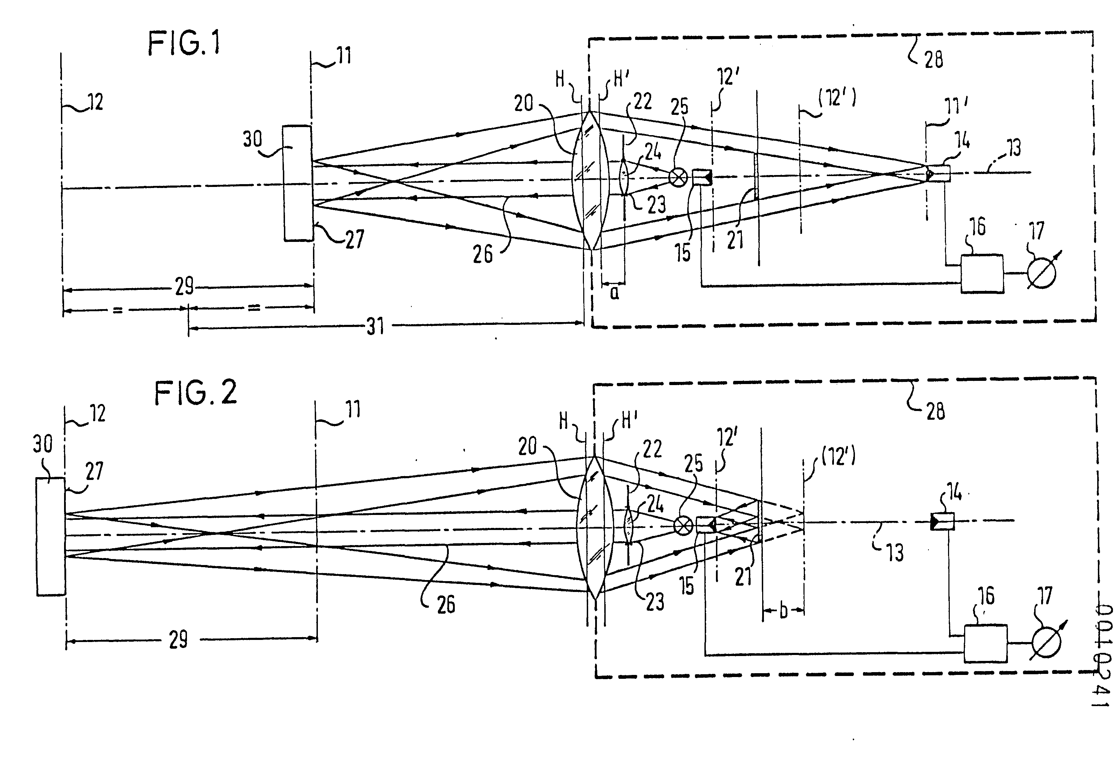

Referring firstly to Figs. 1 and 2 lens means in the form of
an objective 20 with principal planes H and H' is arranged
in one wall of a housing 28. A central aperture stop 22 is
provided on the optical axis of the objective 20 at a distance
"a" inside the housing 28 with a further lens 24 located and
fixed within the central opening 23. A light source 25 is
provided within the housing behind the further lens 24 and
on the optical axis 13 and the light from this light source
is formed into a parallel transmitted light beam 26 by the

l: .: 24 and the central region of the objective 20.

The distance sensing apparatus of Figs. 1 and 2 is intended
and suitable for detecting, at least qualitatively, distances
within a range of distances 29. First and second object planes
11 and 12 are located at both ends of the range of distances
29. In Fig. 1 the surface 27 of an object 30 is reproduced
at the first object plane 11. The surface 27 of the object 30
is located in Fig. 2 at the other end of the range 29 of
distances which can be sensed i.e. in the second object plane
12..

In addition to the illumination beam path 26 Fig. 1 also
shows the envelope for the rays which image the surface 27
onto a first photoelectric converter 14. The photoelectric
converter 14 is arranged on the optical axis 13 at a first
image plane 11' which corresponds to the image of the object
plane 11 formed by the objective 20. As can be seen from Fig. 1
only the marginal region of the objective 20 is used for this
image formation and in particular the outer third of the lens
radius. It will be noted that the arrows shown on the drawings
do not indicate the paths of the individual image forming
rays but rather the general directions of the light beam in
image and object space. In particular the illustrated beam
paths can be considered to be representative of the envelop
within which the light rays are contained. The individual
light rays have been omitted to avoid unnecessarily com-
plicating the drawings. The paths of such light rays will however be readily apparent to those skilled in the art

As seen in Fig. 2 the surface 27 which is located at the
second object plane 12 of the other end of the range 29 is
imaged at the image plane 12'. This image is indicated in
broken lines in Fig. 2. For constructional reasons a plane
mirror 21 is arranged on the optical axis at right angles

0010241

thereto at a distance "b" in front of the second image plane 12'. In this way the image plane is folded back on itself to the position 12' which is closer to the objective. A further photoelectric converter 15 is located on the optical axis 13 at this image plane 12'.

The radial extent of the circular plane mirror 21 (i.e. its size) and its position are chosen in accordance with Fig. 1 so that the mirror just avoids interrupting the light rays which are directed towards the photoelectric converter 14 from the surface of an object located at the first image plane 11.

The outputs of the two photoelectric converters 14 and 15 are applied to an electronic processing circuit 16 which feeds a distance indicating display device 17.

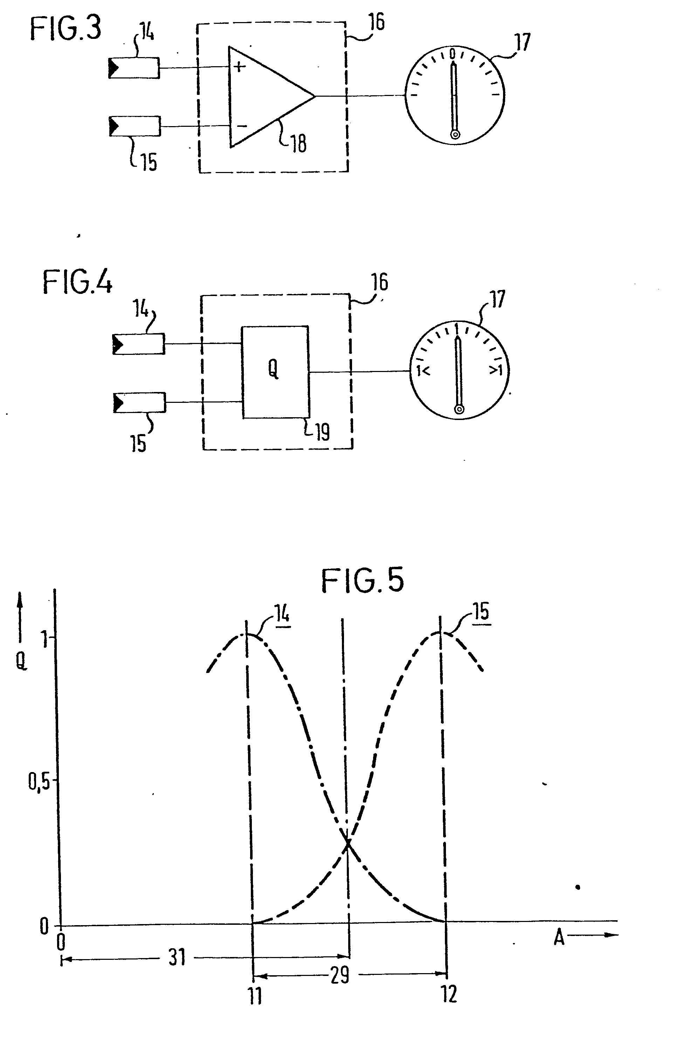

Referring now to Fig. 5 there can be seen two curves 14 and 15 which represent the output signals of the photoelectric converters 14 and 15. These curves also reproduce the dependence of the relative light fluxes $\emptyset$ as received by the photoelectric converters on the distance A of the surface from the distance sensing apparatus.

The locations of the object planes 11 and 12 are indicated on the abscissa by the corresponding reference numerals. The spacing 31 of the centre of the range 29 from the distance sensing apparatus is also schematically illustrated.

As can be seen from Fig. 5 the photoelectric converter 14 receives the largest light flux when the surface 27 of the object 30 is located at the object plane 11. If one continuously moves the surface 27 in the direction towards the object plane 12 then the falling plot 14 shown in Fig. 5 in chain dotted lines reproduces the light flux incident on the photoelectric converter 14. In reverse the photoelectric converter 15 receives the maximum light flux when the surface 27 is arranged,
in accordance with Fig. 2, in the object plane 12. If one now
displaces the surface 27 in the direction towards the object
plane 11 then the plot 15 for the light flux which falls on
the converter 15 and which is shown in broken lines falls
away to the left in the manner which can be seen from Fig. 5.
The light fluxes falling on the photoelectric converters 14
and 15 are the same at substantially the midpoint between the
object planes 11 and 12 i.e. at the distance 31.

This equality of the light fluxes can be detected in particularly
simple fashion using the processing circuit 16 of Fig. 3. In
this arrangement the two photoelectric converters 14 and 15
are connected to a difference forming stage 18 the output
signal of which is representative of the difference of the
two signals from the photoelectric converters and feeds a
display instrument 17. If the display instrument shows the
value zero then the two light fluxes at the photoelectric
converters 14 and 15 are the same and the surface 27 is
located at the distance 31 from the distance sensing apparatus.
If the instrument 17 deflects to the right or the left then, in
simple manner, an indication is provided as to whether the
surface 27 is located beyond or before the desired distance
31.

A distance display calibrated for example in centimeters can
be realized by the further circuit of Fig. 4. In this arrangement the processing circuit 16 contains a quotient forming
stage 19 to the two inputs of which are passed the output
signals of the photoelectric converters 14 and 15. The
quotient forming stage thus forms a quotient signal which
is representative of the quotients of the signals from the
photoelectric converters 14 and 15. This quotient signal
is passed to a display device 17 connected to the quotient
forming stage which can be directly calibrated in distances

0010241

inside the range 29. At "1" the surface 27 is at the distance
31 from the distance sensing apparatus of Figs. 1 and 2.

It is thus important for the invention that the two photo-
electric converters are associated with two different distances
via the same objective 20 and thus via the same diameter
objective. In this way the two photoelectric converters have
two different receiving apertures. This applies both in front
of and also after the objective. It is also important to
ensure that all light reflected from the surface 27 and
received from the objective 20 reaches the associated
photoelectric converter from the location of the reflection
by suitable use of only the marginal region of the objective.

The invention thus provides a distribution of light to the
two photoelectric converters which depends on the aperture
for the received light. It is possible by the use of interchangeable objectives to modify the centre distance 31 and
the range 29 within which distance sensing can be effected.

In the same manner as the plane mirror 21 the central aperture
stop 22 is also of circular form at its external periphery.
The circular border of the mirror 21 and the aperture stop
22 extend concentrically about the optical axis 13.

It is preferred for only a small region of the surface 27 to
be illuminated around the optical axis 13. The extent of
this illuminated region should not exceed the image forming
marginal regions of the objective 20 and should preferably
lie significantly within this marginal region (Figs. 1 and 2).

Furthermore it is important that the illuminating light bead
on the surface 27 of the object 30 has the same size and form
for every position within the range 29. Preferably the light
bead is of circular form and is concentric to the optical

0010241

axis 13. The production of this light bead by means of a parallel light beam concentric to the optical axis 13 is particularly advantageous.

It will be appreciated by those skilled in the art that further modifications can be made to the arrangements shown without departing in the scope of the present teaching. In particular it will be appreciated that other forms of processing circuitry can be used and that whilst the near and remote positions for the first and second object planes are preferably located at the maximum and minimum possible distances for the said illuminated surface from the apparatus that they can also be located at other positions to yield for example a narrower range or a slightly wider range.

Additionally it will be appreciated that it is possible to modify the processing circuitry by the inclusion of preamplification stages for preamplifying the signals from the individual photoelectric converters and that the difference forming stage and quotient forming stage can themselves conveniently take the form of commercially available operational amplifiers with suitable characteristics.

0010241

We claim:

1. Distance sensing apparatus (28) for determining the distance of an illuminated surface (27) from the apparatus, said apparatus comprising lens means (20) for forming an image of said illuminated surface and photoelectric detection means the apparatus being characterized by first and second photoelectric converters (14, 15) respectively disposed at first and second image planes (11', 12') of said lens means, said first and second image planes (11', 12') respectively corresponding to first and second object planes (11, 12) equivalent to near and remote possible locations of said illuminated surface from the apparatus, whereby the light falling on the first and second photoelectric converters (14, 15) depends on the location of the illuminated surface, and by processing means (16, 17) for processing the output signals from said first and second photoelectric converters (14, 15) to produce a single output signal (17) representative of the distance of said illuminated surface (27) from the apparatus (28).

2. Distance sensing apparatus in accordance with claim 1 and characterized in that said near and remote locations correspond to maximum and minimum possible distances (11, 12) for the position of said illuminated surface from the apparatus.

3. Distance sensing apparatus in accordance with either of the preceding claims and characterized in that said processing means (16, 17) comprises a difference forming stage (18) for producing a signal representative of the difference between the outputs of said first and second photoelectric detectors (14, 15) and a display device (17) (Fig. 3) connected to said difference forming stage (16) for displaying said difference signal.

4. Distance sensing apparatus in accordance with any preceding claim and characterized in that the display device (17) (Fig. 3) solely indicates whether the difference signal is zero or smaller or larger than zero.

5. Distance sensing apparatus in accordance with either of claims 1 or 2 and characterized in that said processing circuit (16, 17) comprises a quotient forming stage (19) for forming a quotient signal representative of the quotients of the outputs of said first and second photo-electric converters (14, 15) and a display device (17) (Fig. 4) for displaying said quotient signal.

6. A distance sensing apparatus according to claim 5 and characterized in that the quotient signal display device (17) (Fig. 4) is calibrated to show the location of the illuminated surface with reference to a reference plane.

7. Distance sensing apparatus in accordance with any one of the preceding claims and characterized in that said lens means (20) comprises an objective.

8. Distance sensing apparatus in accordance with any one of the preceding claims and characterized in that there is further provided a central aperture stop (22) for restricting the usable aperture of said lens means (20) to a marginal region thereof.

9. Distance sensing apparatus in accordance with claim 8 and characterized in that said aperture stop (22) is arranged on the image side of said lens means (20).

10. Distance sensing apparatus in accordance with claim 9 and characterized in that said aperture stop (20) is at a distance ("a") from said lens means so that said first and second

0010241

photoelectric converters receive substantially the same quantities of light from their associated first and second object planes when the same surface with the same illumination is located at those object planes.

11. Distance sensing apparatus in accordance with any one of the preceding claims and characterized in that the one (12') of said first and second image planes (11', 12') which lies closest to the lens means (20) is moved towards the lens means (20) by means of a mirror (21) sized and positioned so as not to interrupt the ray path to the other (11') of said first and second image planes (11', 12') when said illuminated surface is located at the corresponding one (11) of said first and second object planes (11, 12).

12. Distance sensing apparatus in accordance with claim 11 and characterized in that said mirror (21) comprises a plane mirror.

13. Distance sensing apparatus according to any one of claims 8 to 12 and characterized in that said aperture stop (22) is provided with a central opening (23) and a light source (25) is arranged behind said central opening.

14. Distance sensing apparatus in accordance with claim 13 and characterized in that a further lens (24) is located within said central opening and cooperates with said lens means (20) to form the light (26) leaving said light source (25) into a parallel light beam for illuminating said surface (27).

15. Distance sensing apparatus in accordance with any one of the preceding claims and characterized in that at least one of said first and second photoelectric converters (14, 15) is disposed on the optical axis (13) of said lens (20).

FIG.1

FIG.2

FIG.3

FIG.4

FIG.5